# EUROPÄISCHE PATENTANMELDUNG

(11) **EP 2 650 616 A1**
(43) Veröffentlichungstag der Anmeldung: **16.10.2013**
(21) Anmeldenummer: 13163584.9
(22) Anmeldetag: 12.04.2013
(51) Int. Cl.: F24F 3/044, F24F 3/12, A01K 1/00, B01L 1/00, B01L 1/02, C12M 1/14, C12M 1/00, F24F 3/16, F24F 6/00, A01K 1/03, F24F 1/04

(54) **Mobiles mehrteiliges Klimasystem**

(30) Priorität: 12.04.2012 DE 202012101333 U
(71) Anmelder: Tiegel GmbH, 01454 Radeberg (DE)
(72) Erfinder: Tiegel, Uwe, 01454 Radeberg (DE)
(74) Vertreter: Lippert, Stachow & Partner

(57) **Zusammenfassung**

Die Erfindung, die ein mobiles mehrteiliges Klimasystem 1 betrifft, welches einen Technikschrank 3 und zumindest einen Klimaschrank 2a umfasst, liegt die Aufgabe zu Grunde Immissionen auf den Inhalt eines Klimaschrankes zu minimieren und dessen Wartungs- und Instandhaltungskosten zu reduzieren. Diese Aufgabe wird dadurch gelöst, dass ein mobiles Klimasystem 1 einen Technikschrank 3, welcher zumindest eine Zuluftbehandlungseinrichtung 4, eine Abluftbehandlungseinrichtung 5, eine Steuereinrichtung 6 sowie Medienanschlüsse 7 umfasst und zumindest einen Klimaschrank 2a, 2b aufweist, welcher über ein Zuluftführungselement 9 sowie ein Abluftführungselement 10 mit dem Technikschrank 3 verbunden ist.

## Beschreibung

Die Erfindung betrifft ein mobiles mehrteiliges Klimasystem, welches einen Technikschrank und zumindest einen Klimaschrank aufweist. Es umfasst dabei weiterhin zumindest eine Zuluftbehandlungseinrichtung, eine Abluftbehandlungseinrichtung, eine Steuereinrichtung sowie Medienanschlüsse. Der Technikschrank ist über ein Zuluftführungselement und ein Abluftführungselement mit zumindest einem Klimaschrank verbunden.

Ein mobiles mehrteiliges Klimasystem der eingangs genannten Art ist dem Fachmann bekannt. Je nach Anwendung obliegt einem solchen System die Aufgabe, bestimmte Parameter der Luft innerhalb eines begrenzten Volumens über teils lange Zeiträume konstant zu halten. Zu diesen Parametern zählen unter anderem die physikalischen Eigenschaften der Lufttemperatur, des Luftdrucks sowie der Luftfeuchtigkeit. Während diese für Anwendungen aus den Bereichen Materialprüfung, Trocknung, Tempern oder Altern meist schon ausreichend sind, gibt es auch andere Anwendungen wie beispielsweise die wissenschaftliche Kleintierhaltung oder die Pflanzenzucht bei denen noch weitere verfahrensspezifische Parameter zu berücksichtigen sind. Dazu zählt unter anderem die Luftwechselrate, um ein Abführen von Kohlendioxid, Schwebstoffen oder von Gerüchen und Schadstoffen sicherzustellen. Außerdem ergeben sich auch andere Aufgaben, welche beispielsweise in den erhöhten Hygiene- und Sterilisierungsanforderungen begründet sind. Diese betreffen sowohl die in einem Klimaschrank verbrachten Lebewesen oder Pflanzen, die insbesondere vor in der Außenluft vorhandenen Krankheitserregern, wie beispielsweise Pilzen, Bakterien oder Viren, geschützt werden müssen. Andererseits muss teilweise aber auch die Umwelt außerhalb eines Klimaschrankes vor beispielsweise keimtragenden Individuen im Inneren des Klimaschrankes geschützt werden.

Eine bekannte Ausführungsform sieht dabei vor, sowohl einen Technikschrank als auch einen Klimaschrank gemeinsam in einem Raum aufzustellen. Eine im Technikschrank angeordnete Zuluftbehandlungsanlage saugt dabei mittels eines Gebläses Raumluft an. Nachfolgend wird die angesaugte Luft temperiert, be- oder entfeuchtet und gefiltert über geeignete Schläuche von unten in den Klimaschrank eingeleitet. Im Klimaschrank strömt die Luft vertikal nach oben, dabei wird sie von einem weiteren Gebläse der am Klimaschrank angeordneten Abluftbehandlungsanlage unterstützt, welche ebenfalls einen Filter aufweist, um beispielsweise Schwebstoffe aus der Abluft zu filtern. Über einen Schlauch wird diese Abluft zurück in den Technikschrank geleitet, damit sie von dort aus, über einen weiteren Schlauch, der an eine Abluftöffnung des Raumes angeschlossen ist, aus diesem abgeleitet wird.

Die, beispielsweise von der Pharmaindustrie, eingesetzten Versuchstiere werden vereinzelt sehr aufwendigen Vorbereitungen unterzogen, bevor sie für Versuchszwecke Verwendung finden. So werden Versuchstiere z.B. gezielt operiert, um bestimmte Krankheitsbilder darzustellen. Nach solchen operativen Eingriffen müssen sich die Versuchstiere erholen, bevor beispielsweise neue Wirkstoffe an ihnen getestet werden können. Dazu werden sie steril und unter, für die Genesung, besonders günstigen Umweltbedingungen oft über längere Zeiträume in Klimaschränken gehalten.

Hinzu kommt, dass die Sinneswahrnehmungen von Versuchstieren teilweise weit über die der menschlichen Leistungsfähigkeit hinausgehen. Vor allem die Schallwahrnehmung ist bei vielen Tieren gegenüber der des Menschen in Richtung Ultra- und/oder Infraschall erweitert. So dass zum Zwecke der Genesung eine möglichst Schallarme Umgebung bevorzugt wird. Ebenfalls erweitert können Sinneswahrnehmungen für elektrische Felder sein, so dass Fragen der elektromagnetischen Umweltverträglichkeit in erhöhtem Maße berücksichtig werden müssen.

Die eingangs genannte Ausführungsform eines mobilen Klimasystems ist in seiner Ausgestaltung nachteilig an die Erfordernisse der wissenschaftlichen Kleintierhaltung angepasst.

Durch Anordnung der Abluftbehandlungseinrichtung am Klimaschrank werden Versuchstiere durch, von der Rotation des Gebläses erzeugte, Vibrationen der Luft sowie des Schrankgehäuses ständig einem erhöhten Geräuschpegel ausgesetzt. Gleichzeitig erzeugt der dafür benötigte elektrische Antrieb ein elektromagnetisches Wechselfeld, welches in die Umgebung abstrahlt und dadurch ebenfalls die Genesung von Versuchstieren störend beeinflussen kann.

Neben den nachteiligen physiologischen Auswirkungen auf Versuchstiere sind es aber auch ökonomische Nachteile, die eine eingangs genannte Ausführungsform eines mobilen Klimasystems aufweist. Versuchstiere werden teilweise in sehr großen Stückzahlen gehalten. Jedem Technikschrank sind bis zu drei Klimaschränke zugeordnet, wobei jeder Klimaschrank eine eigene Filtereinrichtung und ein eigenes Gebläse zur Abluftbehandlung aufweist. Dadurch erhöht sich der Wartungsaufwand des Klimasystems, da jeder Schrank einzeln auf Filterverunreinigungen kontrolliert werden muss. Bei verunreinigten Filtern müssen diese folglich einzeln an jedem Klimaschrank gewechselt werden.

Als nachteilig erscheint bei der eingangs erwähnten Ausführungsform des Klimaschrankes ebenfalls die Lösung hinsichtlich der Luftströmung im Inneren des Klimaschrankes.

Dies liegt zum einen darin begründet, dass die konstruktive Ausführung der Luftdurchlässe am Boden und an der Decke des Klimaschrankes in der Art gestaltet ist, dass die Zu- bzw. Abluft nicht über der gesamten Breite eines Einlegebodens, auf dem auch die Zuchtkäfige stehen, in diesen eintritt bzw. aus diesem austritt. Dies führt zu einer ungleichmäßigen Geschwindigkeitsverteilung der Luftströmung und damit auch zu unterschiedlichen Umgebungsbedingungen der Versuchstiere. Damit einher geht ebenfalls eine Ungleichmäßigkeit hinsichtlich der gefühlten Temperatur der einzelnen Versuchstiere.

Zum anderen wird die Ungleichmäßigkeit der Geschwindigkeitsverteilung weiter dadurch ungünstig beeinflusst, dass Zuchtkäfige im Allgemeinen einen soliden, d.h. luftundurchlässigen Boden aufweisen, so dass die vertikal nach oben strömende Luft an diesen vorbei und vielmehr durch die Lücken der, mit einem gewissen Abstand zueinander aufgestellten, Zuchtkäfige hindurch strömt.

Der Erfindung liegt somit die Aufgabe zugrunde, ein Klimasystem zu schaffen, dessen Immissionen auf den Inhalt eines Klimaschrankes minimiert und dessen Wartungs- und Instandhaltungskosten reduziert werden.

Die Aufgabe wird dadurch gelöst, dass ein mobiles Klimasystem einen Technikschrank, welcher zumindest eine Zuluftbehandlungseinrichtung, eine Abluftbehandlungseinrichtung, eine Steuereinrichtung sowie Medienanschlüsse aufweist, sowie zumindest einen Klimaschrank umfasst, welcher über ein Zuluftführungselement und ein Abluftführungselement mit dem Technikschrank verbunden ist.

Das erfindungsgemäße Klimasystem ist derart gestaltet, dass alle aktiven technischen Komponenten der Zuluft- und Abluftbehandlung sowie der Steuereinrichtung im Technikschrank untergebracht sind, wodurch deren erzeugter Schall und deren erzeugte elektromagnetische Strahlung vom Klimaschrank getrennt bleibt. Dadurch werden im Klimaschrank untergebrachten Inhalte, gleichgültig ob es sich dabei um wissenschaftliche Versuchstiere, Pflanzenzüchtungen oder Andere handelt, bestmöglich vor Störeinflüssen geschützt.

Eine zu Zwecken der wissenschaftliche Versuchstierhaltung bzw. Pflanzenzucht dargestellte Ausführungsform der Erfindung ist dabei lediglich beispielhaft jedoch nicht einschränkend.

Der Aufstellungsort für Technikschrank und eines zu diesem gehörenden Klimaschrankes oder mehrerer zu diesem gehörenden Klimaschränke ist räumlich unabhängig voneinander und wird maßgeblich durch den Druckverlust, der vorzugsweise als flexible Schläuche oder aber auch als feste Verrohrung ausgebildeten Luftführungselemente begrenzt.

Eine im Technikschrank angeordnete Zuluftbehandlungseinrichtung umfasst zumindest eine Kühleinrichtung, eine Beheizungseinrichtung, eine Befeuchtungseinrichtung, eine erte Luftfördereinrichtung sowie eine erste Filtereinrichtung.

In einer Ausführungsform der Erfindung wird die der Zuluftbehandlungseinrichtung zugeführte Luft direkt aus dem Aufstellraum des Technikschrankes entnommen und im Anschluss an die Abluftbehandlung auch wieder in diesen Aufstellraum abgegeben. In einer anderen Ausführungsform kann die Zu- und Abluftversorgung des Technikschrankes aber ach mit der Zu-und Abluftversorgung einer zentralen Gebäudeklimatisierung verbunden werden. Auch dabei arbeitet der erfindungsgemäße Gegenstand im Frischluftbetrieb, also ohne, dass eine Vermischung von Abluft zur Zuluft stattfindet. Dagegen kann aber eine Übertragung von Energie, beispielsweise in Form thermischer Energie mittels eines Wärmeübertrager von der Abluft an die Zuluft erfolgen, wodurch ebenfalls auch ökonomische Vorteile entstehen.

Die bereits aufgeführten Komponenten der Zuluftbehandlungseinrichtung sind dabei in einer Ausführungsform der Erfindung folgendermaßen angeordnet. Die von der Luftfördereinrichtung angesaugte Luft wird zunächst durch einen Grobfilter vorgereinigt und in der Kühleinrichtung auf die Solltemperatur gekühlt sowie gegebenenfalls entfeuchtet. Die Kühleinrichtung ist dabei als Kompressionskältemaschine oder anders ausgeführt. Sollte die Solltemperatur jedoch höher sein als die Temperatur der angesaugten Luft so wird diese durch die der Kühleinrichtung nachgeschaltete Heizeinrichtung, beispielsweise elektrisch erwärmt. Um den Sollwert der Luftfeuchtigkeit einzustellen ist der Heizeinrichtung die Befeuchtungseinrichtung nachgeschaltet. Diese ist beispielsweise als elektrisch beheizter Dampfluftbefeuchter oder anders ausgeführt. Nachfolgend angeordnet ist die Luftfördereinrichtung, beispielsweise im Sinne eins Gebläses, welche die Luft durch weitere Filterstufen der Filtereinrichtung über das Zuluftführungselement in einen Klimaschrank fördert.

Die Luft tritt über einen geeigneten Luftanschluss des Klimaschrankes in diesen ein, durch die erste Luftleiteinrichtung und aus einem ersten Luftdurchlass in den Innenraum des Klimaschrankes, durchströmt diesen vorzugsweise laminar in horizontaler Richtung und strömt in einen zweiten Luftdurchlass und durch eine zweite Luftleiteinrichtung sowie einen weiteren Luftanschluss des Klimaschrankes über ein Abluftführungselement zur Abluftbehandlungseinrichtung des Technikschrankes. Vorteilhaft ist die Anordnung der Luftanschlüsse des Klimaschrankes auf der gleichen Außenseite des Klimaschrankes, vorzugsweise auf der oberen Außenseite. Die Handhabung, beispielsweise ein Verschieben eines auf Rollen gelagerten mobilen Klimaschrankes, wird dadurch wesentlich vereinfacht.

Eine Abluftbehandlungseinrichtung umfasst zumindest eine zweite Luftfördereinrichtung sowie eine zweite Filtereinrichtung. In die Abluftbehandlungseinrichtung eintretende Abluft wird in einer Filtereinrichtung, die in einer Ausführungsform auch mehrstufig ausgeführt sein kann zunächst von Schwebstoffen oder von Gerüchen und Schadstoffen befreit. Dieser nachgeschaltet ist, in einer anderen Ausführungsform der Erfindung, ein zur Filtereinrichtung gehörender Aktivkohlefilter zum Entfernen von eventuell auftretenden Gerüchen. Der Filtereinrichtung wiederum nachgeschaltet ist eine weitere Luftfördereinrichtung, welche die Luft aus dem Technikschrank befördert.

Die oben genannte Anordnung der Komponenten der Zuluft- sowie der Abluftbehandlungseinrichtung ist in verschiedenen Kombinationen möglich. Für eine Vollklimatisierung des Klimaschrankes, bestehend aus Temperierung, Entfeuchtung, Befeuchtung sowie der Förderung der Luft, sind alle weiter oben aufgeführten Komponenten erforderlich. Bei nicht notwendiger Befeuchtung, kann eine Befeuchtungseinrichtung entfallen. Gleiches gilt auch für eine Kühleinrichtung und Heizeinrichtung, welche bei nicht notwendiger Temperierung und/ oder Entfeuchtung entfallen.

Die eingangs erwähnte Steuereinrichtung umfasst dabei ebenfalls eine Bedieneinrichtung zur Ein- und Ausgabe von Informationen, beispielsweise zur Konfiguration des Klimasystems, zum Einstellen von Sollgrößen, wie Temperatur, Luftfeuchte, Druck oder Luftwechselzahl, sowie zur grafischen Überwachung der Sollgrößen. Durch geeignete Schnittstellen kann die Steuereinrichtung auch an ein zentrales Bussystem der Gebäudeleittechnik angeschlossen werden. So ist es möglich, beispielsweise Störungsmeldungen an eine Gebäudeleittechnik weiterzuleiten. Durch weitere Schnittstellen ist es möglich die von zur Steuereinrichtung gehörenden Sensoren erfassten Messgrößen, beispielsweise von Zu- und Abluftbehandlungseinrichtung, sowohl intern als auch auf einem externen Datenträger zu speichern.

Die eingangs erwähnten Medienanschlüsse umfassen unter anderem einen Spannungsversorgungsanschluss zur Stromversorgung eines Technikschrankes, einen Kaltwasseranschluss beispielsweise zur Versorgung einer Befeuchtungseinrichtung und einen Abwasseranschluss beispielsweise zum Entsorgen von Kondensat.

In einer weiteren vorteilhaften Ausgestaltung der Erfindung sind Zuluftführungselemente sowie Abluftführungselemente, welche den Technikschrank mit einem Klimaschrank verbinden, am Klimaschrank mit vertauschter Zuordnung anschließbar sind.

Ein mobiler Klimaschrank umfasst zumindest ein durch eine Tür verschließbares luftdichtes Gehäuse, zumindest einen ersten Luftanschluss und einen zweiten Luftanschluss sowie sich paarweise gegenüberliegende Mittel zum Erzeugen einer horizontalen Strömung umfasst.

Zweckmäßigerweise besteht der Klimaschrank in einer Ausführungsform der Erfindung aus einem von Gehäusewänden begrenztem quaderförmigen Gehäuse, welches fahrbar, beispielsweise auf Rädern oder Rollen, gelagert ist. Zum Zweck der Einbringung oder Entnahme von Lagergut aus oder in das Innere des Gehäuses, den Nutzraum, ist dieser mit einer Tür versehen, welche vorteilhafterweise zumindest teilweise aus einem transparentem Material, wie beispielsweise Glas, bestehen kann, um den Inhalt des Nutzraumes sehen zu können. Um zu verhindern, dass die Strömung innerhalb des Nutzraums gestört wird, ist das Gehäuse vorzugsweise luftdicht ausgeführt. Dies verhindert zum einen ein Eindringen von Luft aus dem Aufstellraum des Klimaschrankes in diesen hinein und zum anderen das Austreten von Luft aus dem Klimaschrank heraus. Die luftdichte Ausführung des Gehäuses ist vor allem in dem Fall vorteilhaft, wenn Lagergut entweder selbst Träger von Krankheitserregern ist und die Umgebung vor diesen geschützt werden muss oder wenn Lagergut vor dem Eindringen von Krankheitserregern von außen geschützt werden muss. In einer weiteren Ausführungsform der Erfindung ist das Gehäuse zumindest abschnittsweise gedämmt ausgeführt, um die Verlustwärmeströme über die Gehäusewände und die Tür zu reduzieren und so die Gesamtenergiebilanz zu verbessern.

Zur Versorgung mit Zuluft bzw. der Entsorgung von Abluft des Klimaschrankes weist dieser zumindest einen ersten Luftanschluss und einen zweiten Luftanschluss auf. Zweckmäßig ist es dabei, dass sowohl der erste Luftanschluss als auch der zweite Luftanschluss an der gleichen Gehäusewand angeordnet sind. Gegenüber der bereits bekannten und eingangs erwähnten Lösung die Zuluft von unten in den Klimaschrank einzubringen und die Abluft oben aus dem Klimaschrank abzuführen, ergibt sich erfindungsgemäß der Vorteil den Klimaschrank mit geringerem Widerstand verfahren zu können, da keine, ein Verfahren behindernden Schläuche auf dem Boden des Aufstellraumes angeordnet sind. Der erste Luftanschluss und der zweite Luftanschluss können dabei separiert voneinander angeordnet sein, so dass sie über zwei Luftführungselemente, beispielsweise Schläuche oder Rohre, mit einem im selben Raum aufgestellten Klimagerät oder einer zentralen Klimaanlage des Gebäudes verbunden sind. Der erste Luftanschluss und der zweite Luftanschluss können aber auch so angeordnet sein, dass ein Luftführungselement nach dem "Schlauch-in-Schlauch-Prinzip" angeschlossen werden kann. Dadurch wird die Anzahl notwendiger Schläuche reduziert und ein Bewegen des Klimaschrankes wird vereinfacht.

Zum Erzeugen einer horizontalen Strömung innerhalb des Nutzraumes umfasst der Klimaschrank sich paarweise gegenüberliegende Mittel. Dabei sind diese in einer vorteilhaften Ausgestaltung der Erfindung so ausgeführt, dass sowohl das Mittel zum Einströmen von Zuluft in den Nutzraum als auch das Mittel zum Auströmen von Abluft aus dem Nutzraum so ausgeführt sind, dass sie in ihrer Funktion untereinander austauschbar sind. Zweckmäßig ist dabei eine gegenüberliegende Anordnung, um ein möglichst geradliniges Durchströmen des Nutzraumes zu ermöglichen. Dabei können die Mittel zum Erzeugen der horizontalen Strömung beispielsweise so ausgeführt sein, dass sie ein integraler Bestandteil des Gehäuses sind oder aber auch so, dass sie zumindest teilweise als Baugruppe ausgeführt sind und dem Gehäuse so teilweise entnommen werden können.

In einer Ausführungsform der Erfindung werden beispielsweise Zuchtkäfige mit darin enthaltenen wissenschaftlichen Kleintieren in den Klimaschrank eingebracht. Die Zuchtkäfige sind dabei vorteilhafterweise mit einem soliden und luftundurchlässigen Boden ausgestattet, wobei der Rest des Zuchtkäfigs, d.h. seine Seitenwände und seine Decke, meist ein Drahtgeflecht aufweist. Eine horizontale und weitestgehend laminare Grundströmung innerhalb des Nutzraumes ist für die Verbringung der eben beschriebenen Art von Zuchtkäfigen besonders vorteilhaft. Einerseits wird die horizontale Grundströmung nicht durch die Ausgestaltung der Zuchtkäfige behindert und andererseits besitzt eine weitestgehend laminare Grundströmung an fast alle Positionen innerhalb des Nutzraumes die gleichen Strömungsbedingungen, in Form von Betrag und Richtung der Geschwindigkeitsvektoren. Störungen der laminaren Strömung, in Form von Turbulenzen, entstehen lediglich durch das eingangs erwähnte Drahtgeflecht der Zuchtkäfige und die wissenschaftlichen Kleintiere selbst.

Zweckmäßigerweise umfassen sich paarweise gegenüberliegende Mittel zum Erzeugen einer horizontalen Strömung jeweils zumindest einen Luftdurchlass. Ein Luftdurchlass ist vorzugsweise plattenförmig als Hohlraum ausgeführt und weißt Luftdurchlassöffnungen auf.

Vorzugsweise sind die plattenförmig als Hohlraum ausgeführten Luftdurchlässe so dimensioniert, dass sie in Länge und Breite annähernd der Länge und Breite einer Gehäusewand entsprechen. Luftdurchlassöffnungen sind dabei zweckmäßigerweise so verteilt, dass bei einer Unterteilung der Fläche des Luftdurchlasses in Teilflächen gleichen Flächeninhaltes in jeder dieser Teilflächen die gleiche Anzahl Luftdurchlassöffnung angeordnet ist. Bei der erfindungsgemäßen Verwendung von sich paarweise gegenüberliegenden Mitteln zur Erzeugung einer horizontalen Strömung in einem beispielsweise quaderförmigen Gehäuse wird dadurch ein großflächiges Durchströmen, d.h. annähernd über die gesamte Nutzraumhöhe sowie Nutzraumtiefe, erreicht.

Die Flächeninhalte, der beispielsweise kreisförmig ausgeführten Luftdurchlassöffnungen, sind dabei in einer Ausführungsform des erfindungsgemäßen Gegenstandes gleich. Damit die Austrittsgeschwindigkeit der Zuluft aus Luftdurchlassöffnungen bei dieser Art der Ausführung gleich ist, muss der Totaldruck der Zuluft vor jeder Luftdurchlassöffnung Hohlraum des Luftdurchlasses gleich sein.

Ist der Totaldruck der Zuluft vor jeder Luftdurchlassöffnung im Hohlraum des Luftdurchlasses nicht gleich, so sind bei dieser Ausführungsform der Erfindung die Flächeninhalte der Luftdurchlassöffnungen nicht gleich. Vielmehr sind die Flächeninhalte so ausgeführt, dass das Produkt von Flächeninhalt einer Luftdurchlassöffnung und Austrittsgeschwindigkeit der Luft aus dieser Luftdurchlassöffnung konstant ist. Zweckmäßig ist demnach die Ausführung der Erfindung, so dass Luftdurchlässe aus dem Klimaschrank entnehmbar sind.

Wie eingangs beschrieben können der erste Luftanschluss und der zweite Luftanschluss unterschiedlich am Gehäuse des Klimaschrankes angeordnet sein. Gleiches gilt für die Anordnung der Luftdurchlässe im Gehäuse des Klimaschrankes. Um die Zuluft dennoch annähernd gleichmäßig Hohlraum des Luftdurchlasses zu verteilen, umfassen die Mittel zum Erzeugen einer horizontalen Strömung Luftleiteinrichtungen. Diese sind in einer weiteren Ausführungsform der Erfindung beispielsweise als gebogene Luftleitbleche ausgeführt, welche auf Gehäusewänden angeordnet sind, an denen Luftdurchlässe angeordnet sind.

Zweckmäßigerweise umfasst der Klimaschrank in einer vorteilhaften Weiterbildung der Erfindung Einlegeböden sowie Haltevorrichtungen für Einlegeböden.

Einlegeböden sind zweckmäßig so gestaltet, dass sie leicht sind, um eine Einbringen und Entnehmen in bzw. aus dem Klimaschrank zu erleichtern, dass sie ihre Oberfläche eben und wenig zerklüftet ist, um eine Reinigung, insbesondere Sterilisierung, zu erleichtern und dass sie für vertikale Luftbewegungen im Nutzraum durchlässig sind.

In einer Ausführungsform der Erfindung sind die Haltevorrichtung der Einlegeböden jeweils paarweise an plattenförmigen, sich gegenüberliegenden, Luftdurchlässen angeordnet, so dass die Einlegeböden in den Nutzraum eingebracht werden, um darauf beispielsweise Zuchtkäfige oder Anderes abzustellen.

Für die gerade beschriebene Ausführungsform ist es zweckmäßig, dass die Gesamtbreite zumindest eines Einlegebodens größer als das Lichtmaß sich paarweise gegenüberliegender Luftdurchlässe ist. Durch Einbringen von Einlegeböden werden Luftdurchlässe gegenseitig verspannt, wodurch sich deren Biegeresonanzfrequenz, welche beispielsweise durch eine Luftströmung angeregt werden kann, zu höheren Frequenzen verschiebt und somit Immissionen, auf beispielsweise lebendiges Lagergut, reduziert werden.

Des Weiteren umfasst ein Klimaschrank in einer anderen Ausgestaltung der Erfindung zumindest einen Druckmessstutzen, der über eine Druckmessleitung mit der Steuereinrichtung des Technikschranks verbunden ist.

Durch eine zur Steuereinheit gehörende Druckmesseinrichtung kann damit der statische Druck des Inneren des Klimaschrankes bestimmt werden. Dazu ist in einer vorteilhaften Ausgestaltung der Erfindung die Druckmesseinrichtung, beispielsweise in Form eines Differenzdruckaufnehmers, im Technikschrank angeordnet und über eine Druckmessleitung, z.B. in Form eines flexiblen Schlauches, mit dem Druckmessstutzen eines Klimaschrankes verbunden. In einer anderen Ausführung der Erfindung ist die Druckmesseinrichtung, beispielsweise in Form eines Differenzdruckaufnehmers, am Druckmessstutzen eines Klimaschrankes angeordnet und über eine Druckmessleitung, beispielsweise in Form einer elektrischen Verbindung mit der Steuereinrichtung des Technikschrankes verbunden.

Durch geeignete Variierung der Leistung der Luftfördereinrichtungen der Zu- und Abluftbehandlungseinrichtung kann somit der statische Druck des Inneren des Klimaschrankes variiert werden. Somit kann im Inneren des Klimaschrankes entweder ein Unter- oder ein Überdruck eingestellt werden. Durch einen Unterdruck wird beispielsweise ein Austreten von Keimen durch Undichtheiten des Klimaschrankes vermieden. Wohingegen durch einen Überdruck im Inneren des Klimaschrankes ein Eintreten, beispielsweise von Krankheitserregern, verhindert wird.

Zweckmäßig ist es, dass zumindest eine Beleuchtungseinrichtung eines Klimaschrankes über einen elektrischen Leiter mit der Steuereinrichtung eines Technikschranks verbunden ist. Somit kann beispielsweise ein künstlicher Tag-Nacht-Zyklus im Klimaschrank erzeugt werden.

Vorzugweise wird ein Klimaschrank zumindest teilweise aus Werkstoffen gefertigt, die der Werkstoffgruppe der korrosions- und/ oder säurebeständigen Stähle angehören.

Lagergut in Form von lebenden Organismen erhöht einerseits durch Atmung andererseits durch Ausscheiden von, teilweise aggressive Substanzen aufweisenden, Exkrementen ständig die Feuchtigkeit des Nutzraums. Durch zumindest teilweisen Einsatz von korrosions- und säurebeständigen Werkstoffen für den Klimaschrank können somit Korrosion und die damit einhergehenden Nachteile zeitlich verzögert bzw. verhindert werden.

Die Erfindung soll nachfolgend lediglich beispielhaft, nicht jedoch beschränkend, anhand eines Ausführungsbeispiels näher erläutert werden. In der zugehörigen Zeichnung zeigt
Fig. 1 eine schematische Darstellung des Klimasystems,
Fig. 2a eine Vorderansicht des mobilen Klimaschrankes,
Fig. 2b eine Seitenansicht des mobilen Klimaschrankes und
Fig. 2c eine Vorderansicht eines Luftdurchlasses.

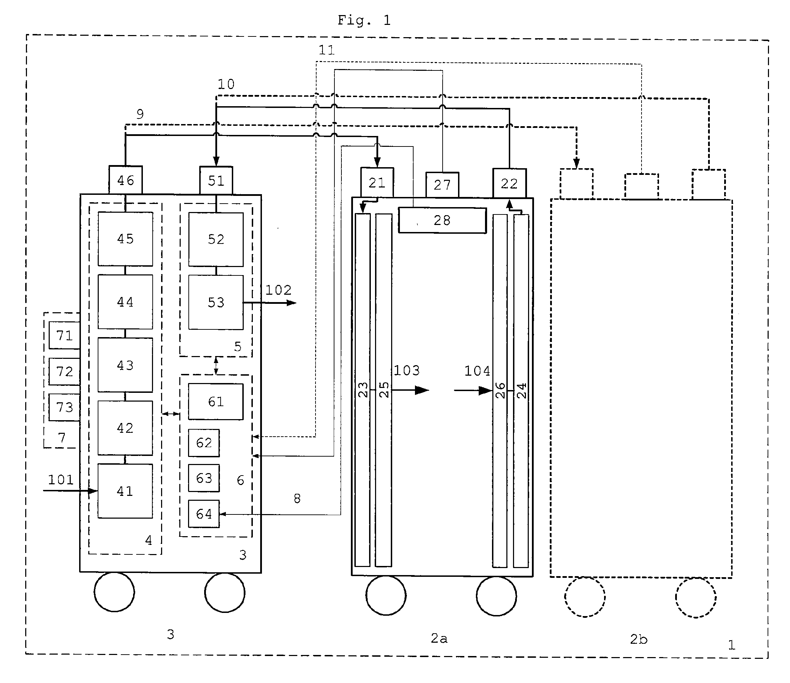

Fig. 1 zeigt eine schematische Darstellung eines, in einem nicht weiter dargestellten Raum, aufgestellten mobilen Klimasystems 1. Das Klimasystem 1 umfasst dabei einen Technikschrank 3, einen ersten Klimaschrank 2a und weitere Klimaschränke 2b. Der Technikschrank 3 weist zumindest einen Spannungsversorgungsanschluss 71, einen Kaltwasseranschluss 72 sowie einen Abwasseranschluss 73 als Medienanschlüsse 7 auf. Neben den Medienanschlüssen 7 umfasst der Technikschrank 3 eine Zuluftbehandlungseinrichtung 4, eine Abluftbehandlungseinrichtung 5 sowie eine Steuereinrichtung 6.

Außenluft 101 aus einem nicht dargestellten Raum wird mittels einer ersten Luftfördereinrichtung 44 durch eine Kühleinrichtung 41, eine Beheizungseinrichtung 42, eine Befeuchtungseinrichtung 43 gefördert. Nachfolgend fördert die erste Luftfördereinrichtung 44 die Zuluft 103 durch eine erste Filtereinrichtung 45 und einen Zuluftanschluss 46. Damit verlässt die Zuluft 103 den Technikschrank 3 gelangt über eine Zuluftführungselement 9 zum einem ersten Luftanschluss 21 des ersten Klimaschrankes 2a. Durch eine erste Luftleiteinrichtung 23 und einen ersten Luftdurchlass 25 strömt Zuluft 103 durch den ersten Klimaschrank 2a. Abluft 104 strömt durch einen zweiten Luftdurchlass 26 über eine zweite Luftleiteinrichtung 24 sowie einen zweiten Luftanschluss 22 aus dem ersten Klimaschrank 2a. Eine zweite Luftfördereinrichtung 53 der Abluftbehandlungseinrichtung 5 saugt Abluft 104 durch ein Abluftführungselement 10, eine zweite Filtereinrichtung 52 und gibt die Fortluft 102 in einen nicht dargestellten Raum ab.

Weitere Klimaschränke 2b besitzen einen nicht dargestellten identischen Aufbau wie der erste Klimaschrank 2a und sind jeweils über ein Zuluftführungselemet 9 und ein Abluftführungselement 10 an den Technikschrank 3 angeschlossen.

Mittels der Steuereinheit 6, welche durch eine Druckmessleitung 11 und einen Druckmessstutzen 27 mit dem Inneren eines ersten Klimaschrankes verbunden ist, wird der statische Luftdruck der Zuluft 103 bestimmt.

Eine im ersten Klimaschrank 2a angeordnete Beleuchtungseinrichtung 28 ist über eine elektrische Verbindung 8 an einen zur Steuereinrichtung 6 gehörenden Beleuchtungsanschluss 64 angeschlossen. Über die Bedienungseinrichtung 61 wird die Steuereinrichtung 6 konfiguriert und überwacht. Über die Bedieneinrichtung 61 wird die Beleuchtungseinrichtung 28 manuell oder automatisiert ein- oder ausgeschaltet. Über einen Netzwerkanschluss 62 wird die Steuereinrichtung 6 mit einer nicht dargestellten Gebäudeleittechnik verbunden. An einem Datenanschluss 63 werden Daten der Steuereinrichtung 6 auf einen nicht dargestellten Datenträger abgelegt.

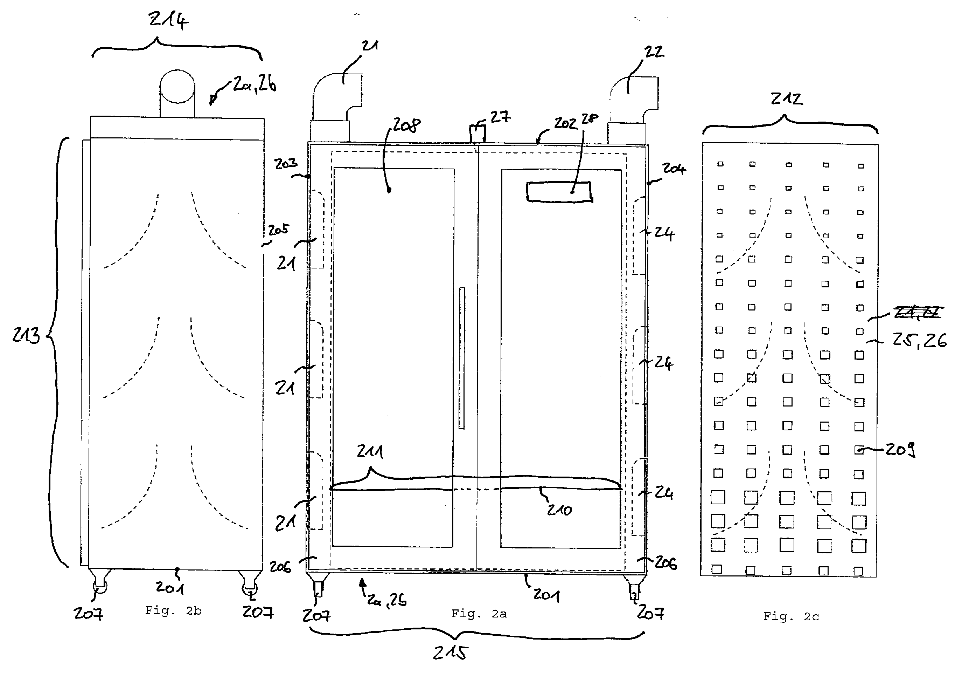

Sowohl Fig. 2a als auch Fig. 2b zeigen denselben Klimaschrank 2a, 2b. Der Klimaschrank 2a, 2b umfasst dabei eine untere Gehäusewand 201, eine obere Gehäusewand 202, eine linke Gehäusewand 203, eine rechte Gehäusewand 204, eine hintere Gehäusewand 205 und Türen 206, welche ein quaderförmiges, verschließbares, luftdichtes Gehäuse bilden, welches den Nutzraum 208 umschließt. Dabei weist der Klimaschrank 2a, 2b zumindest abschnittsweise eine nicht dargestellte Wärmedämmung auf.

An der unteren Gehäusewand 201 sind Räder 207 angeordnet, mit Hilfe derer der Klimaschrank 2a, 2b verfahren werden kann.

An der oberen Gehäusewand 202 sind zumindest ein erster Luftanschluss 21, ein zweiter Luftanschluss 22 sowie ein Druckmessstutzen 27 angeordnet. Das nicht dargestellten Zuluftführungselement 9 sowie Abluftführungselement 10, beispielsweise in Form von Schläuchen oder Rohren, welche den Klimaschrank 2a, 2b mit einer nicht dargestellten Klimatisierungsvorrichtung verbinden, sind am ersten Luftanschluss 21 und am zweiten Luftanschluss 22 des Klimaschrankes 2a, 2b auch mit vertauschter Zuordnung anschließbar. Der Druckmessstutzen 27 ist mittig der Gehäusewandbreite 215 angeordnet und mit dem Nutzraum 208 verbunden.

Der erste Luftanschluss 21 und der zweite Luftanschluss 22 sind so ausgeführt, dass sie die Zuluft 103 über annähernd der gesamten Luftdurchlassbreite 212 verteilen, bevor die Zuluft 103 in den Klimaschrank 2a, 2b eintritt. An der rechten Gehäusewand 204 und der linken Gehäusewand 203 sind eine erste Luftleiteinrichtungen 23 und eine zweite Luftleiteinrichtung 24 angeordnet. Durch die gebogene Form und Anordnung der ersten Luftleiteinrichtung 23 wird die Zuluft 103 annähernd gleichmäßig entlang der Gehäusewandhöhe 213 und der Gehäusewandtiefe 214 der linken Gehäusewand 203 verteilt, bevor sie, durch die Luftdurchlassöffnungen 209 des ersten Luftdurchlasses 25 in den Nutzraum 208 eintritt. Nach dem Durchströmen des Nutzraums 208 durchströmt die Abluft 104 die Luftdurchlassöffnungen 209 des zweiten Luftdurchlasses 26 und wird durch die zweite Luftleiteinrichtung 24 annähernd gleichmäßig entlang der Gehäusewandhöhe 213 und der Gehäusewandtiefe 214 der rechten Gehäusewand 204 verteilt, bevor die Abluft 104 durch einen zweiten Luftanschluss 22 sowie das nicht dargestellte Abluftführungselement 10 zu einer nicht dargestellten Klimatisierungsvorrichtung strömt.

Fig. 2c zeigt eine Vorderansicht des ersten Luftdurchlasses 25 und zweiten Luftdurchlasses 26 mit Luftdurchlassöffnungen 209, die in dieser Ausführungsform als rechteckige, ungleich große Luftdurchlassöffnungen 209 ausgeführt sind. Der Betrag der Flächeninhalte der Luftdurchlassöffnungen 209 nimmt entlang die Gehäusewandhöhe 213 von der oberen Gehäusewand 202 bis zur unteren Gehäusewand 201 zu. In einer nicht dargestellten Ausführungsform des ersten Luftdurchlasses 25 und zweiten Luftdurchlasses 26 bleibt der Flächeninhalt der Luftdurchlassöffnungen 209 entlang die Gehäusewandhöhe 213 von der oberen Gehäusewand 202 bis zur unteren Gehäusewand 201 gleich. Der erste Luftdurchlass 25 und der zweite Luftdurchlass 26 sind austauschbar ausgeführt und umfassen nicht dargestellte Haltevorrichtungen zum Aufnehmen zumindest eines Einlegebodens 210.

Die Einlegebodenbreite 211 ist dabei größer als das Lichtmaß zwischen dem ersten Luftdurchlass 25 und dem zweiten Luftdurchlass 26, welche jeweils an der linken Gehäusewand 203 und der rechten Gehäusewand 204 des quaderförmigen Gehäuses des Klimaschrankes 2a, 2b angeordnet sind.

Im Nutzraum 208 ist zumindest eine Beleuchtungseinrichtung 28 angeordnet, welche über eine nicht dargestellte elektrische Verbindung 8 an einen nicht dargestellten Beleuchtungsanschluss 64 angeschlossen ist.

### Bezugszeichenliste

| | |
|---|---|
| 1 | Klimasystem |
| 2a | erster Klimaschrank |
| 2b | weitere Klimaschränke |
| 3 | Technikschrank |
| 4 | Zuluftbehandlungseinrichtung |
| 5 | Abluftbehandlungseinrichtung |
| 6 | Steuereinrichtung |
| 7 | Mediananschlüsse |
| 8 | elektrische Verbindung |
| 9 | Zuluftführungselement |
| 10 | Abluftführungselement |
| 11 | Druckmessleitung |
| 21 | erster Luftanschluss |
| 22 | zweiter Luftanschluss |
| 23 | erste Luftleiteinrichtung |
| 24 | zweite Luftleiteinrichtung |
| 25 | erster Luftdurchlass |
| 26 | zweiter Luftdurchlass |
| 27 | Druckmessstutzen |
| 28 | Beleuchtungseinrichtung |
| 41 | Kühleinrichtung |
| 42 | Beheizungseinrichtung |
| 43 | Befeuchtungseinrichtung |
| 44 | erste Luftfördereinrichtung |
| 45 | erster Filter |
| 46 | Zuluftanschluss |
| 51 | Abluftanschluss |
| 52 | zweiter Filter |
| 53 | zweite Luftfördereinrichtung |
| 61 | Bedienungseinrichtung |
| 62 | Netzwerkanschluss |
| 63 | Datenanschluss |
| 64 | Beleuchtungsanschluss |
| 71 | Spannungsversorgungsanschluss |
| 72 | Kaltwasseranschluss |
| 73 | Abwasseranschluss |
| 101 | Außenluft |
| 102 | Fortluft |
| 103 | Zuluft |
| 104 | Abluft |
| 201 | untere Gehäusewand |
| 202 | obere Gehäusewand |
| 203 | linke Gehäusewand |
| 204 | rechte Gehäusewand |
| 205 | hintere Gehäusewand |
| 206 | Türen |
| 207 | Räder |
| 208 | Nutzraum |
| 209 | Luftdurchlassöffnungen |
| 210 | Einlegeboden |
| 211 | Einlegebodenbreite |
| 212 | Luftdurchlassbreite |
| 213 | Gehäusewandhöhe |
| 214 | Gehäusewandtiefe |
| 215 | Gehäusewandbreite |

## Patentansprüche

1. Mobiles Klimasystem (1) umfassend:
- einen Technikschrank (3), welcher zumindest eine Zuluftbehandlungseinrichtung (4), eine Abluftbehandlungseinrichtung (5), eine Steuereinrichtung (6) sowie Medienanschlüsse (7) aufweist,
- zumindest einen Klimaschrank (2a, 2b), welcher über ein Zuluftführungselement (9) sowie ein Abluftführungselement (10) mit dem Technikschrank (3) verbunden ist.

2. Mobiles Klimasystem (1) nach Anspruch 1, **dadurch gekennzeichnet, dass** die Zuluftbehandlungseinrichtung (4) zumindest eine Kühleinrichtung (41), eine Beheizungseinrichtung (42), eine Befeuchtungseinrichtung (43), eine erste Luftfördereinrichtung (44) sowie eine erste Filtereinrichtung (45) aufweist.

3. Mobiles Klimasystem (1) nach einem der vorigen Ansprüche, **dadurch gekennzeichnet, dass** die Abluftbehandlungseinrichtung (5) zumindest eine zweite Luftfördereinrichtung (52) sowie eine zweite Filtereinrichtung (51) aufweist.

4. Mobiles Klimasystem (1) nach einem der vorigen Ansprüche, **dadurch gekennzeichnet, dass** Zuluftführungselemente (9) sowie Abluftführungselemente (10), welche den Technikschrank (3) mit einem Klimaschrank (2a, 2b) verbinden, am Klimaschrank (2a, 2b) mit vertauschter Zuordnung anschließbar sind.

5. Mobiles Klimasystem (1) nach einem der vorigen Ansprüche, **dadurch gekennzeichnet, dass** ein Klimaschrank (2a, 2b) ein durch zumindest eine Tür (7) verschließbares luftdichtes Gehäuse, zumindest einen ersten Luftanschluss (21) und einen zweiten Luftanschluss (22) sowie sich paarweise gegenüberliegende Mittel zum Erzeugen einer horizontalen Strömung umfasst.

6. Mobiles Klimasystem (1) nach einem der vorigen Ansprüche, **dadurch gekennzeichnet, dass** sich paarweise gegenüberliegende Mittel zum Erzeugen einer horizontalen Strömung jeweils zumindest einen ersten Luftdurchlass (25) sowie einen zweiten Luftdurchlass (26) aufweisen.

7. Mobiles Klimasystem (1) nach einem der vorigen Ansprüche, **dadurch gekennzeichnet, dass** der erste Luftdurchlass (25) sowie der zweite Luftdurchlass (26) jeweils plattenförmig als Hohlraum ausgebildet sind und Luftdurchlassöffnungen (209) aufweisen.

8. Mobiles Klimasystem (1) nach einem der vorigen Ansprüche, **dadurch gekennzeichnet, dass** der erste Luftdurchlass (25) sowie der zweite Luftdurchlass (26) aus dem Klimaschrank (2a, 2b) entnehmbar sind.

9. Mobiles Klimasystem (1) nach einem der vorigen Ansprüche, **dadurch gekennzeichnet, dass** die Flächeninhalte von Luftdurchlassöffnungen (209) des ersten Luftdurchlasses (25) sowie des zweite Luftdurchlasses (26) jeweils unterschiedlich sind.

10. Mobiles Klimasystem (1) nach einem der vorigen Ansprüche, **dadurch gekennzeichnet, dass** die Mittel zum Erzeugen einer horizontalen Strömung eine erste Luftleiteinrichtung (23) sowie eine zweite Luftleiteinrichtung (24) umfassen.

11. Mobiles Klimasystem (1) nach einem der vorigen Ansprüche, **dadurch gekennzeichnet, dass** der Klimaschrank (2a, 2b) zumindest einen Einlegeboden (210) aufweist.

12. Mobiles Klimasystem (1) nach einem der vorigen Ansprüche, **dadurch gekennzeichnet, dass** der Klimaschrank (2a, 2b) Halteelemente für Einlegböden (210) aufweist.

13. Mobiles Klimasystem (1) nach einem der vorigen Ansprüche, **dadurch gekennzeichnet, dass** die Einlegebodenbreite (211) zumindest eines Einlegbodens (210) größer als das Lichtmaß des sich gegenüberliegenden ersten Luftdurchlasses (25) und des zweiten Luftdurchlasses (26) ist.

14. Mobiles Klimasystem (1) nach einem der vorigen Ansprüche, **dadurch gekennzeichnet, dass** ein Klimaschrank (2a, 2b) zumindest einen Druckmessstutzen (27) aufweist, der über eine Druckmessleitung (11) mit der Steuereinrichtung (6) des Technikschranks (3) verbunden ist.

15. Mobiles Klimasystem (1) nach einem der vorigen Ansprüche, **dadurch gekennzeichnet, dass** der Druckmessstutzen (27) senkrecht an einer Gehäusewand (201, 202, 203, 204, 205) angeordnet ist.

16. Mobiles Klimasystem (1) nach einem der vorigen Ansprüche, **dadurch gekennzeichnet, dass** ein Klimaschrank (2a, 2b) zumindest eine Beleuchtungseinrichtung (28) aufweist, die über eine elektrische Verbindung (8) mit der Steuereinrichtung (6) des Technikschranks (3) verbunden ist.

17. Mobiles Klimasystem (1) nach einem der vorigen Ansprüche, **dadurch gekennzeichnet, dass** der Klimaschrank (2a, 2b) zumindest teilweise Werkstoffe aus der Werkstoffgruppe der korrosions- und/ oder säurebeständigen Stähle aufweist.
